# EUROPÄISCHE PATENTANMELDUNG

(11) **EP 1 736 734 A2**
(43) Veröffentlichungstag der Anmeldung: **27.12.2006**
(21) Anmeldenummer: 06012947.5
(22) Anmeldetag: 23.06.2006
(51) Int. Cl.: G01C 21/26, H04H 1/00

(54) **Navigationsanlage und Verfahren zur Extraktion von verschlüsselt übertragenen Informationen**

(30) Priorität: 23.06.2005 DE 102005029594
(71) Anmelder: Bury Sp.z.o.o, 39 300 Mielec (PL)
(72) Erfinder: Piekarz, Roman, 39-300 Mielec (PL)
(74) Vertreter: Gerstein, Hans Joachim

(57) **Zusammenfassung**

Eine Navigationsanlage (1) mit einem Rundfunkempfänger (6) zur Extraktion von verschlüsselt übertragenen Informationen aus Rundfunksignalen, mit einer Navigationseinheit (7) und mit einer Datenträgerleseeinheit (8) wird beschrieben. Die Navigationseinheit (7) ist zum Auslesen von auf einem Datenträger (9) abgespeicherten Entschlüsselungsdaten (ED) mit der Datenträgerleseeinheit (8) und zur Extraktion von verschlüsselten Informationen mit Hilfe der ausgelesenen Entschlüsselungsdaten (ED) eingerichtet.

## Beschreibung

Die Erfindung betrifft eine Navigationsanlage mit einem Rundfunkempfänger zur Extraktion von verschlüsselt übertragenen Informationen, insbesondere von Verkehrsinformationen aus Rundfunksignalen, mit einer Navigationseinheit und mit einer Datenträgerleseeinheit.

Die Erfindung betrifft weiterhin ein Verfahren zur Extraktion von verschlüsselt übertragenen Informationen aus Rundfunksignalen mit einer Navigationsanlage.

Zur Freischaltung von verschlüsselten Daten, die über Rundfunksignale übertragen und nur gegen Gebühr genutzt werden können, ist es bekannt, dem Nutzer einen Lizenzschlüssel zur Verfügung zu stellen. Dieser kann entweder als Zugangscode manuell eingegeben werden oder als Schlüsselsatz auf einem Datenträger zur Ausführung eines Entschlüsselungsalgorithmusses bereitgestellt werden.

So werden beispielsweise zur Nutzung von Bezahl-Fernsehen den Nutzern Zugangsberechtigungs-Speicherkarten zur Verfügung gestellt, die in Verbindung mit einem Videodatendecoder die Entschlüsselung eines verschlüsselten Rundfunkprogramms ermöglichen.

Zur Sicherung von Daten und Software, die auf einem Datenspeicher abgespeichert und vertrieben werden, vor unbefugter Benutzung nach Erstellung unautorisierten Raubkopien, ist es bekannt, einen Zugangscode aus einem Lizenzschlüssel und einer auf dem Datenträger gespeicherten Lizenznummer zu erzeugen. Die Lizenznummer kann aber auch telefonisch oder über ein Computernetzwerk vom Datenanbieter unter Angabe des auf dem Datenträger aufgedruckten Lizenzschlüssels abgefragt werden. Der Zugangscode wird anschließend abgespeichert und ermöglicht die Benutzung der installierten und einmalig freigegebenen Daten, beispielsweise in Form von Software, ohne dass eine erneute Autorisierung nötig ist.

In Kenntnis des Lizenzschlüssels und ggf. des Freischaltcodes können die Daten allerdings auch von jedem Dritten in Verbindung mit einer unautorisierten Kopie der Daten auf einen Kopier-Datenträger genutzt werden.

Es ist auch bekannt, den Zugangscode aus einer Kombination eines Lizenzschlüssels mit der Serienummer der die Daten verarbeitenden Datenverarbeitungseinrichtung zu berechnen. Dies hat für den Nutzer den Nachteil, dass der an sich autorisierte Datenträger nur in Verbindung mit einer einzigen vom Nutzer bei der ersten Freigabe festgelegten Datenverarbeitungseinrichtung möglich ist.

Aufgabe der Erfindung ist es, eine verbesserte Navigationsanlage mit einem Rundfunkempfänger zur Extraktion von verschlüsselt übertragenen Informationen aus Rundfunksignalen bereitzustellen, bei der die Freischaltung kostenpflichtiger individueller Mehrwertdienste, insbesondere verschlüsselt übertragener Verkehrsinformationen optimal abgesichert ist und einfach verwaltet werden kann.

Die Aufgabe wird mit der Navigationsanlage der eingangs genannten Art, dadurch gelöst, dass die Navigationseinheit zum Auslesen von auf einem Datenträger abgespeicherten Entschlüsselungsdaten mit der Datenträgerleseeinheit und zur Extraktion von verschlüsselten Informationen mit Hilfe der ausgelesenen Entschlüsselungsdaten eingerichtet ist.

Durch die Abspeicherung von Entschlüsselungsdaten auf dem zum Betrieb der Navigationsanlage ohnehin vorgesehenen Datenträger, der beispielsweise Kartenmaterial beinhaltet, ist eine einfache Steuerung der Freischaltung von Mehrwertdiensten möglich.

Der Datenträger kann bereits werksseitig mit den Entschlüsselungsdaten versehen sein, wobei die Abrechnung der Mehrwertdienste bereits mit dem Kauf des Datenträgers erfolgt.

Durch Austausch des Datenträgers können in Abhängigkeit von den jeweils auf dem Datenträger enthaltenen Entschlüsselungsdaten ggf. verschiedene Mehrwertdienste genutzt werden. Diese Mehrwertdienste können in Verbindung mit dem individuellen Datenträger in verschiedenen Navigationsanlagen genutzt werden, da die Entschlüsselungsdaten auf dem Datenträger abgespeichert und damit unabhängig von der Navigationsanlage sind.

Besonders vorteilhaft ist es, wenn die Entschlüsselungsdaten einen Entschlüsselungsalgorithmus umfassen. Dieser Entschlüsselungsalgorithmus kann dann von der Navigationsanlage aufgerufen werden, ohne dass diese an sich besonders zur Entschlüsselung der verschlüsselt übertragenen Informationen ausgebildet sein muss.

Die Speicherung der Entschlüsselungsdaten einschließlich optional des Entschlüsselungsalgorithmus auf dem Datenträger hat den Vorteil, dass der Datenträger einfach über ein Computernetzwerk, beispielsweise das Internet, aktualisiert werden kann. So kann eine Zugangsberechtigung über das Internet von einem Provider bezogen werden, der anschließend die Entschlüsselungsdaten an den Nutzer schickt, der diese auf den Datenträger abspeichert.

Die Extraktion der verschlüsselten Informationen kann auch ein einfaches Freischalten der Nutzung von Mehrwertdiensten in Abhängigkeit von Entschlüsslungsdaten sein.

Die Aufgabe wird weiterhin durch ein Verfahren zur Extraktion von verschlüsselt übertragenen Informationen aus Rundfunksignalen mit einer oben beschriebenen Navigationsanlage gelöst durch
a) Auslesen einer vom Hersteller eines Datenträgers vergebenen und unveränderbar auf dem Datenträger abgespeicherten Datenträgernummer von dem Datenträger,
b) Generieren eines für die Extraktion der Informationen erforderlichen Zugangscodes aus der Datenträgernummer und einer Lizenznummer, und
c) Extrahieren der Informationen, wenn der Zugangscode zulässig ist.

Durch die Koppelung der Freischaltung der Mehrwertdienste an eine unveränderbare Seriennummer des Datenträgers, die vom Hersteller des Datenträgers vergeben wird, ist ein Schutz vor Nutzung der Mehrwertdienste in Verbindung mit einer unautorisierten Kopie des Datenträges gegeben. Dabei wird die Tatsache ausgenutzt, dass herkömmliche Datenträger in der Regel mit einer vom Hersteller vorgegebenen und nicht manipulierbar abgespeicherten Datenträgernummer ausgeliefert werden. Diese Datenträgernummer kann problemlos ausgelesen werden und dient als Grundlage für die Berechnung eines Zugangscodes.

Die Datenträgernummer kann beispielsweise in Verbindung mindestens mit einer Lizenznummer eingesetzt werden, die individuell für den ausgelieferten Datenträger vergeben wird und nicht geheim sein muss. So kann die Lizenznummer beispielsweise auf der Verpackung des Datenträgers oder dem Datenträger selbst aufgedruckt oder im Datenträger auslesbar abgespeichert sein.

In diesem Zusammenhang ist es vorteilhaft, wenn die für einen Original-Datenträger vergebene Lizenznummer von dem Datenträger ausgelesen wird.

Weiterhin ist es vorteilhaft, wenn ein auf dem Datenträger abgespeicherter Satz mindestens einer Lizenznummer und eines Zugangscodes sowie die vom Hersteller des Datenträgers unveränderbar auf dem Datenträger abgespeicherte Datenträgernummer ausgelesen werden. Aus der Lizenznummer und der Datenträgernummer wird ein Zugangscode generiert, der mit dem abgespeicherten Zugangscode zur Freigabe der Extraktion der Informationen verglichen wird.

Die Berechnung des Zugangscodes erfolgt mit an sich bekannten Algorithmen, beispielsweise Secure-Hash-Algorithmen. Mit Hilfe des Zugangscodes kann ein beispielsweise auf dem Datenträger oder in der Navigationsanlage bereitgestellter Entschlüsselungsalgorithmus zur Entschlüsselung von verschlüsselten Daten betrieben werden.

Weiterhin ist es vorteilhaft, wenn ein Auslesen eines Seriencodes der Navigationsanlage und einer Extraktion der Informationen in Abhängigkeit von dem Seriencode erfolgt. Damit ist die Zugangssteuerung für Mehrwertdienste auf eine bestimmte Navigationsanlage eingeschränkt.

Die Erfindung wird nachfolgend anhand der beigefügten Zeichnung anhand eines Ausführungsbeispiels näher erläutert. Es zeigt:

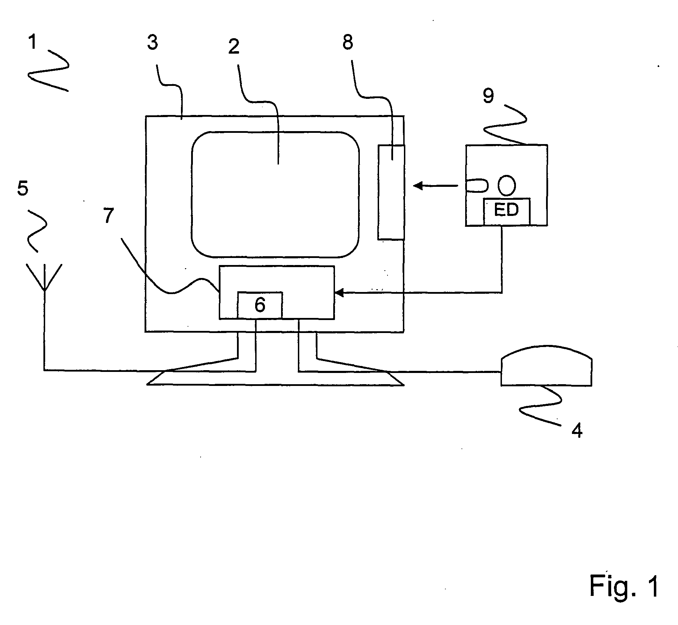

- Figur 1 -: Skizze einer Navigationsanlage.

Die Figur 1 lässt eine Skizze einer Navigationsanlage 1 mit einer Anzeigeeinheit 2 in einem Gehäuse 3 zur Darstellung der Routenführung erkennen. Die Bedienung der Navigationsanlage 1 kann beispielsweise über eine Fernbedienung drahtlos und/oder drahtgebunden erfolgen.

Die Navigationsanlage 1 ist mit einer Positionsortungseinheit 4 und mit einer Rundfunkantenne 5 verbunden. Mindestens die Rundfunkantenne 5 ist zu einem Rundfunkempfänger 6 der Navigationseinheit 7 geführt, der zur Extraktion von Verkehrsinformationen aus mit der Rundfunkantenne 5 empfangenen Rundfunksignalen eingerichtet ist.

Die Navigationsanlage 1 hat weiterhin eine Datenträgerleseeinheit 8 für Datenträger 9, auf denen Navigationsdaten, insbesondere Kartenmaterial, zur Routenführung abgespeichert sind.

Zur Freischaltung der Nutzung von Mehrwertdiensten und insbesondere zur Nutzung verschlüsselter Verkehrsinformationen, die als kostenpflichtige TMC-Dienste über die frei zugänglichen Verkehrsinformationen hinaus weitergehende Informationen bieten, wird vorgeschlagen, Entschlüsselungsdaten ED mit der Datenträgerleseeinheit 8 von dem Datenträger 9 auszulesen und in Abhängigkeit von den Entschlüsselungsdaten ED die Mehrwertdienste freizuschalten.

Dabei kann auch ein Entschlüsselungsalgorithmus von dem Datenträger 9 ausgelesen und in der Navigationseinheit 1 zur Entschlüsselung der verschlüsselt übertragenen Verkehrsinformationen und sonstiger Mehrwertdienstinformationen ausgeführt werden.

Die Freischaltung der Mehrwertdienste kann in Verbindung mit einer vom Hersteller eines Datenträgers 9 vergebenen und unveränderbar auf dem Datenträger 9 abgespeicherten Datenträgernummer erfolgen. Diese wird von der Navigationseinheit 7 mit Hilfe der Datenträgerleseeinheit 8 von dem Datenträger 9 ausgelesen.

Auf dem Datenträger 9 kann zusätzlich mindestens ein Zugangscode abgespeichert sein. Von der Navigationseinheit 7 wird nach Auslesen der Datenträgernummer mit einem geeigneten Algorithmus, beispielsweise einem Secure-Hash-Algorithmus, ein Zugangscode generiert, der mit dem auf dem Datenträger 9 abgespeicherten Zugangscode verglichen wird.

Weiterhin kann die Erzeugung des Zugangscodes in Verbindung mit einer Lizenznummer erfolgen, die individuell für den Nutzer oder den Datenträger 9 vergeben wird. Die Generierung und Überprüfung des Zugangscodes erfolgt dann mit einem geeigneten Algorithmus aus der Kombination aus Datenträgernummer und Lizenznummer.

Die Abspeicherung der Entschlüsselungsdaten ED auf dem Datenträger 9 kann bereits werksseitig erfolgen. Es ist aber auch möglich, den Datenträger 9 zu aktualisieren und beispielsweise eine ggf. zeitlich begrenzte Nutzungsberechtigung für Mehrwertdienste über ein globales Computernetzwerk, z. B. Internet, zu erwerben. Über das globale Computernetzwerk werden dann die Entschlüsselungsdaten ED dem Nutzer zur Abspeicherung auf dem Datenträger 9 bereitgestellt. Ein solcher Datenträger 9 kann beispielsweise eine Compact-Flash-Speicherkarte sein.

## Patentansprüche

1. Navigationsanlage (1) mit einem Rundfunkempfänger (6) zur Extraktion von verschlüsselt übertragenen Informationen, insbesondere Verkehrsinformationen aus Rundfunksignalen mit einer Navigationseinheit (7) und mit einer Datenträgerleseeinheit (8), **dadurch gekennzeichnet, dass** die Navigationseinheit (7) zum Auslesen von auf einem Datenträger abgespeicherten Entschlüsselungsdaten (ED) mit der Datenträgerleseeinheit (8) zur Extraktion von verschlüsselten Informationen mit Hilfe der ausgelesenen Entschlüsselungsdaten (ED) eingerichtet ist.

2. Navigationsanlage (1) nach Anspruch 1, **dadurch gekennzeichnet, dass** die Entschlüsselungsdaten (ED) einen Entschlüsselungsalgorithmus umfassen.

3. Navigationsanlage (1) nach Anspruch 1 oder 2, **dadurch gekennzeichnet, dass** die Navigationsanlage (1) zum Freischalten der Nutzung von Mehrwertdiensten in Abhängigkeit von den Entschlüsselungsdaten (ED) eingerichtet ist.

4. Verfahren zur Extraktion von verschlüsselt übertragenen Informationen aus Rundfunksignalen mit einer Navigationsanlage (1) nach einem der vorhergehenden Ansprüche, **gekennzeichnet durch**
a) Auslesen einer vom Hersteller eines Datenträgers (9) vergebenen und unveränderbar auf dem Datenträger (9) abgespeicherten Datenträgernummer von dem Datenträger (9),
b) Generieren eines für die Extraktion der Informationen erforderlichen Zugangscodes aus der Datenträgernummer und einer Lizenznummer, und
c) Extrahieren der Informationen, wenn der Zugangscode zulässig ist.

5. Verfahren nach Anspruch 4, **gekennzeichnet durch** Auslesen der für einen Original-Datenträger vergebenen Lizenznummer von dem Datenträger (9).

6. Verfahren nach Anspruch 4 oder 5, **gekennzeichnet durch** Auslesen eines auf dem Datenträger (9) abgespeicherten Satzes mindestens einer Lizenznummer und eines Zugangscodes und Auslesen der vom Hersteller des Datenträgers (9) unveränderbar auf dem Datenträger (9) abgespeicherten Datenträgernummer, Generieren eines Zugangscodes aus der Lizenznummer und der Datenträgernummer und Vergleichen des generierten Zugangscodes mit dem abgespeicherten Zugangscode zur Freigabe der Extraktion der Informationen.

7. Verfahren nach einem der Ansprüche 4 bis 6, **gekennzeichnet durch** Auslesen eines Seriencodes der Navigationsanlage (1) und Extraktion der Informationen weiterhin in Abhängigkeit von dem Seriencode.

8. Verwendung eines Datenträgers (9) mit auf dem Datenträger (9) abgespeicherten Entschlüsselungsdaten (ED) für eine Navigationsanlage (1) nach einem der Ansprüche 1 bis 3 oder zur Durchführung des Verfahrens nach einem der Ansprüche 4 bis 7.
